# EUROPEAN PATENT APPLICATION

(11) **EP 2 961 086 A2**
(43) Date of publication of application: **30.12.2015**
(21) Application number: 13807614.6
(22) Date of filing: 03.09.2013
(51) Int. Cl.: H04B 10/2507

(54) **METHOD FOR PROLONGING TRANSMISSION DISTANCE OF PASSIVE OPTICAL NETWORK SYSTEM AND OPTICAL LINE TERMINAL**

(30) Priority: 22.02.2013 CN 201310057682
(71) Applicant: ZTE Corporation, Shenzhen, Guangdong 518057 (CN)
(72) Inventor: CHEN, Xue, Shenzhen Guangdong 518057 (CN); CHEN, Yangyang, Shenzhen Guangdong 518057 (CN); SU, Jie, Shenzhen Guangdong 518057 (CN); LI, Changlei, Shenzhen Guangdong 518057 (CN); HE, Zian, Shenzhen Guangdong 518057 (CN); HUANG, Xingang, Shenzhen Guangdong 518057 (CN); ZHOU, Xian, Shenzhen Guangdong 518057 (CN)
(74) Representative: Tischner, Oliver
(86) International application number: PCT/CN2013/082826
(87) International publication number: WO 2013/189462

(57) **Abstract**

Disclosed are a method for prolonging the transmission distance of a passive optical network system and an optical line terminal. The method includes: acquiring each EDC tap coefficient corresponding to each ONU; and according to the each EDC tap coefficient corresponding to the each ONU, performing dispersion compensation respectively on an uplink signal sent from the each ONU. Thus the dispersion suffered by ONUs at different transmission distances can be pertinently compensated, so that the transmission distance of the system can be effectively prolonged.

## Description

### Technical field

The present disclosure relates to a passive optical network (PON) system transmission technology, and in particularly, to a method for prolonging the transmission distance of a PON system, and to an optical line terminal (OLT).

### Background

For a high speed PON system (the system rate is greater than 10Gbit/s), an optical signal will be affected by dispersion in long-distance transmission, resulting in a reduced transmission distance, generating an error in the received signal, and degrading the system performance. Hence, signal dispersion compensation is needed to extend the transmission distance of the system so as to improve the system performance. For a wavelength division multiplexing (WDM) PON system based on a low-cost colorless optical network unit (ONU), due to the low modulation rate of the ONU (typically less than several Gb/s), the requirement of large-capacity transmission cannot be meet by the WDM PON system. Thus, there is a need for signal dispersion compensation to extend the transmission distance of the system so as to increase the transmission capacity.

At present, a method of performing dispersion compensation on uplink signals which are sent from ONUs by adding an Electronic Dispersion Compensator (EDC) in the OLT is generally employed in order to achieve the purpose of extending the transmission distance of the system.

In the prior art, an EDC may compensate, with a fixed amount of dispersion, for uplink signals of different ONUs (for example, based on the amount of dispersion of the farthest ONU). However, in a PON system, since one OLT corresponds to a plurality of ONUs, and the transmission distances between the different ONUs and the OLT are different, uplink signals of the ONUs have a different amount of dispersion. Compensating with an insufficient or excess amount of dispersion for the uplink signals cannot effectively prolong the transmission distance of the system.

### Summary

In view of above, the embodiments of the present disclosure aim to provide a method for prolonging the transmission distance of a PON system, and an OLT, which can effectively prolong the transmission distance of the system.

To achieve the above purpose, the technical solution of embodiments of the present disclosure is achieved as follows.

An embodiment of the present disclosure provides a method for prolonging a transmission distance of a PON system. The method includes that:
each electronic dispersion compensation (EDC) tap coefficient corresponding to each optical network unit (ONU) is acquired;
dispersion compensation is respectively performed on an uplink signal that is sent from the each ONU according to the each EDC tap coefficient corresponding to the each ONU.

Preferably, after the each EDC tap coefficient corresponding to the each ONU is acquired, the method may further include that:
the acquired each EDC tap coefficient corresponding to the each ONU is updated.

Preferably, updating the acquired each EDC tap coefficient corresponding to the each ONU may include:
in a normal ONU operation phase, the acquired each EDC tap coefficient corresponding to the each ONU is updated according to a channel change or a preset time interval.

Preferably, updating the acquired each EDC tap coefficient corresponding to the each ONU may include:
the acquired each EDC tap coefficient corresponding to the each ONU is updated by using a known field in an existing overhead.

Preferably, updating the acquired each EDC tap coefficient corresponding to the each ONU may include:
in an ONU registration phase, the each EDC tap coefficient corresponding to the each ONU is calculated according to a training sequence sent from the each ONU and a tap coefficient adjustment algorithm.

Preferably, before calculating the each EDC tap coefficient corresponding to the each ONU according to the training sequence sent from the each ONU and the tap coefficient adjustment algorithm, the method may further include: a training sequence grant is sent to an ONU that newly joins in a network, and a training sequence replied by the ONU according to the training sequence grant is received.

An embodiment of the present disclosure provides an OLT. The OLT includes:
a tap coefficient acquiring unit is configured to acquire each EDC tap coefficient corresponding to each ONU; and
a dispersion compensation unit is configured to perform dispersion compensation respectively on an uplink signal that is sent from the each ONU according to the each EDC tap coefficient corresponding to the each ONU.

Preferably, the OLT may further include:
a tap coefficient updating unit configured to update the acquired each EDC tap coefficient corresponding to the each ONU.

Preferably, the tap coefficient updating unit may be further configured to, in a normal ONU operation phase, update the acquired each EDC tap coefficient corresponding to the each ONU according to a channel change or a preset time interval.

Preferably, the tap coefficient updating unit may be further configured to update the acquired each EDC tap coefficient corresponding to the each ONU by using a known field in an existing overhead.

Preferably, the tap coefficient acquiring unit may be further configured to, in an ONU registration phase, calculate the each EDC tap coefficient corresponding to the each ONU according to a training sequence sent from the each ONU and a tap coefficient adjustment algorithm.

Preferably, a training sequence grant sending unit may be configured to send a training sequence grant to an ONU that newly joins in a network; and
a training sequence receiving unit may be configured to receive a training sequence replied by the ONU according to the training sequence grant.

As described above, the solution of the present disclosure may include: acquiring each EDC tap coefficient corresponding to each ONU; and performing dispersion compensation respectively on an uplink signal sent from the each ONU according to the Each EDC tap coefficient corresponding to the each ONU. Hence, the embodiments of the present disclosure can pertinently compensate the dispersion suffered by ONUs at different transmission distances, so that the transmission distance of the system can be effectively prolonged.

### Brief description of the drawings

Fig. 1 is a schematic flowchart of a method for prolonging the transmission distance of a PON system in accordance with an embodiment of the present disclosure;
Fig. 2 is a schematic structure diagram of an OLT in accordance with an embodiment of the present disclosure;
Fig. 3 is a schematic flowchart for implementing a method of prolonging the transmission distance of a PON system in accordance with an embodiment of the present disclosure; and
Fig. 4 is a schematic flowchart for updating a tap coefficient in a 10G TDM PON system in accordance with an embodiment of the present disclosure.

### Detailed description

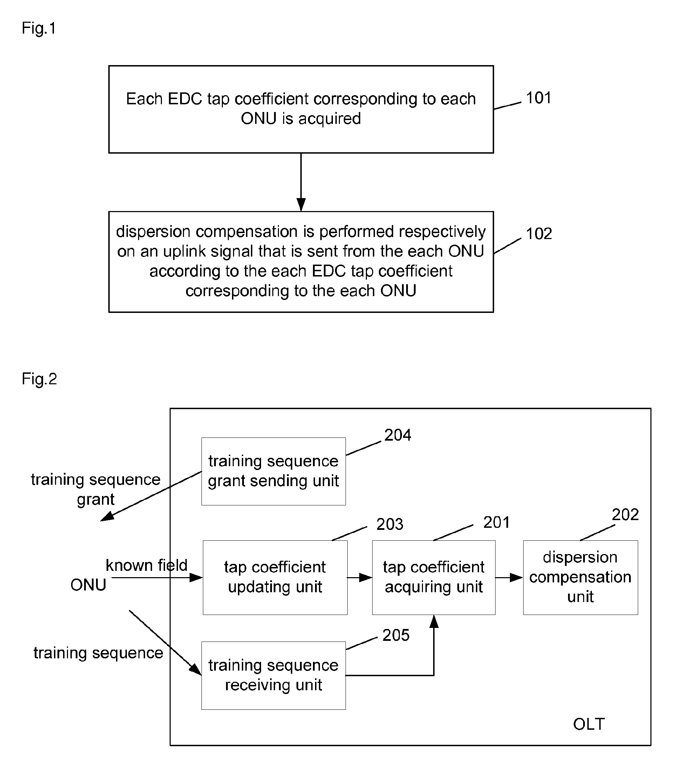

In an embodiment of the present disclosure, as shown in Fig. 1, a method for prolonging the transmission distance of a PON system may include following steps.
Step 101 includes that each EDC tap coefficient corresponding to each ONU is acquired;
Step 102 includes that dispersion compensation is respectively performed on an uplink signal that is sent from the each ONU according to the each EDC tap coefficient corresponding to the each ONU.

Preferably, after the each EDC tap coefficient corresponding to the each ONU is acquired, the method may further include that:
the acquired each EDC tap coefficient corresponding to the each ONU is updated.

Preferably, the step of updating the acquired each EDC tap coefficient corresponding to the each ONU may include that:
in a normal ONU operation phase, the acquired each EDC tap coefficient corresponding to the each ONU is updated according to a channel change or a preset time interval.

Preferably, the step of updating the acquired each EDC tap coefficient corresponding to the each ONU may include that:
the acquired each EDC tap coefficient corresponding to the each ONU is updated by using a known field in an existing overhead, for example, by using a known field (such as a logical link identifier of an ONU) in a bandwidth request.

Preferably, the step of acquiring the each EDC tap coefficient corresponding to the each ONU may include that:
in an ONU registration phase, the each EDC tap coefficient corresponding to the each ONU is calculated according to a training sequence sent from the each ONU and a tap coefficient adjustment algorithm.

Preferably, before the each EDC tap coefficient corresponding to the each ONU is calculated according to the training sequence sent from the each ONU and the tap coefficient adjustment algorithm, the method may further include that:
a training sequence grant is sent to an ONU that newly joins in a network, and a training sequence replied by the ONU according to the training sequence grant is received.

In an embodiment of the present disclosure, as shown in Fig. 2, an OLT includes:
a tap coefficient acquiring unit 201 that is configured to acquire each EDC tap coefficient corresponding to each ONU; and
preferably, the tap coefficient acquiring unit 201 is further configured to, in an ONU registration phase, calculate the each EDC tap coefficient corresponding to the each ONU according to a training sequence sent from the each ONU and a tap coefficient adjustment algorithm.

A dispersion compensation unit 202 is configured to perform dispersion compensation respectively on an uplink signal that is sent from the each ONU according to the each EDC tap coefficient corresponding to the each ONU.

The above tap coefficient acquiring unit 201 and dispersion compensation unit 202 may be implemented by a Central Processing Unit (CPU), a Digital Signal Processor (DSP), or a Field Programmable Gate Array (FPGA) in the OLT.

Preferably, the OLT may further include:
a tap coefficient updating unit 203 that is configured to update the acquired each EDC tap coefficient corresponding to the each ONU.

Preferably, the tap coefficient updating unit 203 is further configured to, in a normal ONU operation phase, update the acquired each EDC tap coefficient corresponding to the each ONU according to a channel change or a preset time interval.

Preferably, the tap coefficient updating unit 203 is further configured to update the acquired each EDC tap coefficient corresponding to the each ONU by using a known field in an existing overhead, for example, by using a known field (such as a logical link identifier of an ONU) in a bandwidth request.

The above tap coefficient updating unit 203 may be implemented by a Central Processing Unit (CPU), a Digital Signal Processor (DSP), or a Field Programmable Gate Array (FPGA) in the OLT.

Preferably, the OLT may further include a training sequence grant sending unit 204 that is configured to send a training sequence grant to an ONU that newly joins in a network; and
a training sequence receiving unit 205 that is configured to receive a training sequence replied by the ONU according to the training sequence grant.

The above training sequence grant sending unit 204 and training sequence receiving unit 205 may be implemented by a Central Processing Unit (CPU), a Digital Signal Processor (DSP), or a Field Programmable Gate Array (FPGA) in the OLT.

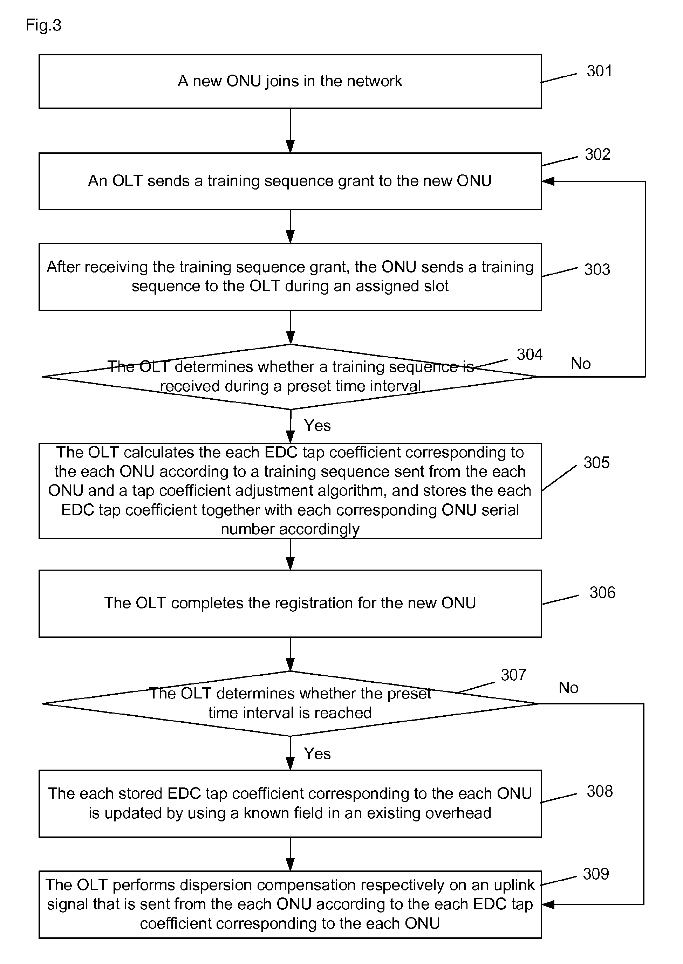

An embodiment related to a method for prolonging the transmission distance of a PON system is described below in conjunction with Fig. 3.
Step 301 includes that a new ONU joins a network.
Step 302 includes that an OLT sends a training sequence grant to the new ONU.

Here, the training sequence grant is for granting the ONU to send a training sequence.
Step 303 includes that after receiving the training sequence grant, the ONU sends a training sequence to the OLT during an assigned slot;
   here, the training sequence refers to a group of sequences which are known to the ONU and the OLT and are sent by the ONU before the ONU sends information data formally. When these known sequences are transmitted through a channel, a variety of channel impairments may change characteristics of the known sequences, such as amplitude, phase, etc. The OLT may estimate various characteristics that are suffered to impairments by calculating the received training sequences with impairments together with the known training sequences without impairments, in order to compensate for a variety of impaired information data, thereby reducing the error rate.
Step 304 includes that: the OLT determines whether a training sequence is received during a preset time interval; upon receiving a training sequence, step 305 is performed; and if no training sequence is received, step 302 is performed.
Step 305 includes that: the OLT calculates the each EDC tap coefficient corresponding to the each ONU according to a training sequence sent from the each ONU and a tap coefficient adjustment algorithm, and stores the each EDC tap coefficient together with corresponding ONU serial number accordingly.
Step 306 includes that: the OLT completes the registration for the new ONU.
Step 307 includes that: the OLT determines whether the preset time interval is reached; when the preset time interval is reached, step 308 is performed; when the preset time interval has not been reached yet, step 309 is performed.

Here, updating the each EDC tap coefficient according to a fixed time interval may avoid frequent updating of the each tap coefficient, thereby the accuracy of the each tap coefficient can be ensured to some extent.
Step 308 includes that: according to a PON system protocol, the stored each EDC tap coefficient corresponding to the each ONU is updated by using a known field in an existing overhead;
   here, the existing overhead may be a protocol control frame, and the known field may be an identification field of the PON system or a logical link identifier of an ONU. Thus, a training sequence is only needed to be sent once instead of being sent again during the updating of a tap coefficient, thereby greatly saving the overhead.

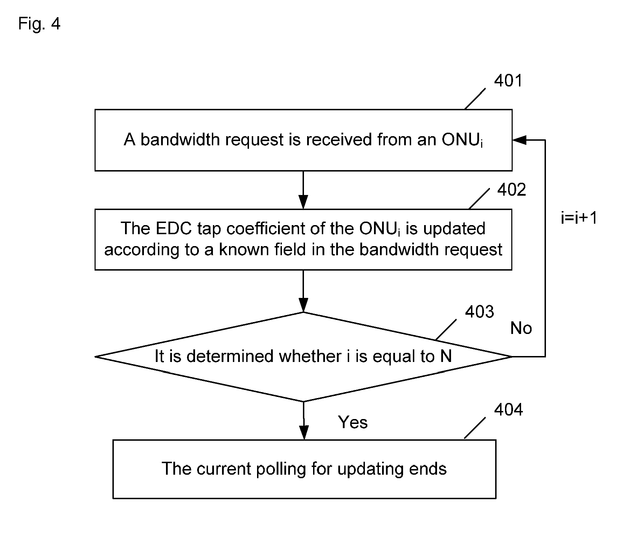

In particularly, for a 10G Time Division Multiplexing (TDM) PON system, EDC tap coefficients corresponding to different ONUs are polled for updating according to correspondence between different slots and the ONUs. Referring to Fig. 4, the updating may include following steps.
Step 401 includes that: a bandwidth request is received from an ONUᵢ, wherein i is a positive integer indicating the serial number of an ONU, 1 ≤ i ≤ N, and N is the total number of registered ONUs;
step 402 includes that: the EDC tap coefficient of the ONUᵢ is updated according to a known field in the bandwidth request;
step 403 includes that: it is determined whether i is equal to N, if i is not equal to N, i is incremented by 1, and the process returns to step 401; if i is equal to N, the process proceeds to step 404;
step 404 includes that: the current polling for updating ends.

For a WDM PON system based on a low-cost colorless ONU, since the Wavelength Division Multiple Access (WDMA) technology is employed in the uplink access and each ONU has a separate wavelength channel (i.e., different ONUs occupy respective wavelength channels to transmit data), the ONUs do not need to send a bandwidth request for acquiring a bandwidth grant from an OLT. Accordingly, the OLT does not need to receive a bandwidth request, and may update each EDC tap coefficient of each ONU by way of polling according to a known field in the overhead of WDM PON directly. The specific implementation may depend on requirements and implementation complexity.
Step 309 includes that the OLT performs dispersion compensation respectively on an uplink signal that is sent from each ONU according to each EDC tap coefficient corresponding to the each ONU.

In view of above, the embodiments of the present disclosure may be applied to a WDM PON system based on a low-cost colorless ONU. By using an EDC in an OLT to compensate uplink signals for the dispersion suffered in transmission, the transmission distance of the system can be prolonged and the modulation rate of uplink signals also can be improved.

The embodiments of the present disclosure also may be applied in a TDM PON system. In a TDM PON system, an ONU that needs to send an uplink signal may send a bandwidth request to an OLT. The OLT may grant the ONU a bandwidth to be occupied and assign a time slot according to the bandwidth request. The ONU may send an uplink signal according to the assigned time slot. Since the OLT knows the ONUs corresponding to different time slots, the OLT may only set one EDC. A control module may be configured to control the EDC to use different tap coefficients during different time slots, such that the dispersion suffered by ONUs at different transmission distances can be pertinently compensated. Thus, the transmission distance of the system can be prolonged while the cost of access network system is also effectively reduced.

The embodiments of the present disclosure also may be applied in a 10G TDM+WDM PON system. The TDM+WDM PON system employs a hybrid access mode of TDM and WDM, in which a group of ONUs may employ a group of wavelength. since the ONUs that employ the same wavelength use the same access mode as that of a TDM PON, and use the same dispersion compensation mode as that of a TDM PON, the details will not be described here.

The above are only the preferred embodiments of the present disclosure, and are not intended to limit the protection scope of the present disclosure.

## Claims

1. A method for prolonging a transmission distance of a passive optical network (PON) system, comprising:
acquiring each electronic dispersion compensation (EDC) tap coefficient corresponding to each optical network unit (ONU); and
performing dispersion compensation on an uplink signal sent from the each ONU respectively according to the each EDC tap coefficient corresponding to the each ONU.

2. The method according to claim 1, after acquiring the each EDC tap coefficient corresponding to the each ONU, the method further comprising:
updating the acquired each EDC tap coefficient corresponding to the each ONU.

3. The method according to claim 2, wherein updating the acquired each EDC tap coefficient corresponding to the each ONU comprises:
in a normal ONU operation phase, updating the acquired each EDC tap coefficient corresponding to the each ONU according to a channel change or a preset time interval.

4. The method according to claim 2, wherein updating the acquired each EDC tap coefficient corresponding to each ONU comprises:
updating the acquired each EDC tap coefficient corresponding to the each ONU by using a known field in an existing overhead.

5. The method according to claim 1, wherein acquiring the each EDC tap coefficient corresponding to the each ONU comprises:
in an ONU registration phase, calculating the each EDC tap coefficient corresponding to the each ONU according to a training sequence sent from the each ONU and a tap coefficient adjustment algorithm.

6. The method according to claim 5, before calculating the each EDC tap coefficient corresponding to the each ONU according to the training sequence sent from the each ONU and the tap coefficient adjustment algorithm, the method further comprising:
sending a training sequence grant to an ONU that newly joins in a network, and receiving a training sequence replied by the ONU according to the training sequence grant.

7. An optical line terminal (OLT), comprising:
a tap coefficient acquiring unit configured to acquire each electronic dispersion compensation (EDC) tap coefficient corresponding to each optical network unit (ONU); and
a dispersion compensation unit configured to perform dispersion compensation respectively on an uplink signal that is sent from the each ONU according to the each EDC tap coefficient corresponding to the each ONU.

8. The OLT according to claim 7, further comprising:
a tap coefficient updating unit configured to update the acquired each EDC tap coefficient corresponding to the each ONU.

9. The OLT according to claim 8, wherein the tap coefficient updating unit is configured to, in a normal ONU operation phase, update the acquired each EDC tap coefficient corresponding to the each ONU according to a channel change or a preset time interval.

10. The OLT according to claim 8, wherein,
the tap coefficient updating unit is configured to update the acquired each EDC tap coefficient corresponding to the each ONU by using a known field in an existing overhead.

11. The OLT according to claim 7, wherein,
the tap coefficient acquiring unit is configured to, in an ONU registration phase, calculate the each EDC tap coefficient corresponding to the each ONU according to a training sequence sent from the each ONU and a tap coefficient adjustment algorithm.

12. The OLT according to claim 11, further comprising:
a training sequence grant sending unit is configured to send a training sequence grant to an ONU that newly joins in a network; and
a training sequence receiving unit is configured to receive a training sequence replied by the ONU according to the training sequence grant.
